Europäisches Patentamt

European Patent Office

Office européen des brevets

(19)

(11) Veröffentlichungsnummer: **0 304 033**

**A2**

(12) **EUROPÄISCHE PATENTANMELDUNG**

(21) Anmeldenummer: **88113351.6**

(22) Anmeldetag: **17.08.88**

(51) Int. Cl.⁴: **G06F 11/22**

(30) Priorität: **19.08.87 DE 3727687**

(43) Veröffentlichungstag der Anmeldung:
**22.02.89 Patentblatt 89/08**

(84) Benannte Vertragsstaaten:
**AT BE CH DE ES FR GB IT LI NL SE**

(71) Anmelder: **Siemens Aktiengesellschaft Berlin und München**
**Wittelsbacherplatz 2**
**D-8000 München 2(DE)**

(72) Erfinder: **Kraus, Günther, Dipl.-Ing.**
**Adalbert-Stifter-Strasse 17**
**D-8152 Vagen(DE)**
Erfinder: **Beutelspacher, Albrecht, Prof. Dr.**
**Landwehrweg 7**
**D-6305 Grossen-Buseck(DE)**

(54) **Verfahren zum Diagnostizieren einer von Computerviren befallenen Datenverarbeitungsanlage.**

(57) Das Verfahren ist gekennzeichnet durch die Verwendung eines, einen Algorithmus enthaltenden, virusfreien Programms P, aus dem zum Zeitpunkt $x = t_0$ mit Hilfe des Algorithmus ein Programmauthentifizierungs-Code $PAC = f(P)$ gebildet und zusammen mit dem Programm abgespeichert wird. Zu Prüfzwecken wird nun dieses virusfreie Programm zu späteren Zeitpunkten $x' = t_1, t_2, t_3, \dots t_n$ als Köderprogramm in die zu untersuchende Datenverarbeitungsanlage eingebracht und gestartet, der sich dabei jeweils ergebende Programmauthentifizierungs-Code $PAC'$ mit dem gespeicherten Programmauthentifizierungs-Code $PAC$ verglichen und bei Ungleichheit ein Fehlersignal erzeugt.

EP 0 304 033 A2

## Verfahren zum Diagnostizieren einer von Computerviren befallenen Datenverarbeitungsanlage

Die Erfindung betrifft ein Verfahren zum Diagnostizieren einer von Computerviren befallenen Datenverarbeitungsanlage gemäß den Merkmalen des Oberbegriffs des Patentanspruchs 1.

Computerviren haben die Eigenschaft, daß sie ursprünglich sterile Programme infizieren, d.h. hinsichtlich Qualität und Quantität so verändern, daß die Funktion und eventuell die Länge des befallenen Programms mit denen des ursprünglich sterilen Programms nicht mehr übereinstimmen. Ein Virusprogramm kann dabei sowohl als isoliertes Programm als auch in Gestalt eines bereits infizierten Benutzerprogramms auftreten. In beiden Fällen besitzt es die Fähigkeit, eine Kopie von sich selbst zu erzeugen und in ein anderes Programm einzuschleusen, das dann seinerseits wieder als Virus auftreten und weitere Programme infizieren kann mit der Folge, daß sich Computerviren letztlich "lawinenartig" ausbreiten können.

In Anbetracht des Schadens, den ein infiziertes Programm anrichten kann, kommt dem rechtzeitigen Erkennen und Auffinden eines solchen Programms eine erhebliche Bedeutung zu. In der Praxis stößt diese jedoch auf erhebliche Schwierigkeiten, weil einem Programm, zumal einem umfangreichen Programm, auf den ersten Blick grundsätzlich nicht anzusehen ist, ob es infiziert ist oder nicht. Vergleichstests mit Hilfe eines sterilen Exemplars desselben Programms anhand einer rein visuellen Prüfung wären zwar grundsätzlich möglich, scheiden aber aus praktischen Erwägungen aus. Auch der Einsatz der Datenverarbeitungsanlage zur Programmprüfung kommt letztlich nicht in Betracht, weil maschinell nicht mit letzter Sicherheit feststellbar ist, ob ein Programm wirklich das tut, was es soll, abgesehen davon, daß noch viel weniger feststellbar ist, ob ein Programm etwas tut, was es gar nicht soll.

Im übrigen hätten derartige Prüfroutinen, falls sie erfolgreich realisiert werden könnten, nur dann einen Sinn, wenn sie beliebig oft wiederholt werden könnten. Virusprogramme können nämlich mit einer besonderen Eigenart, der sogenannten "Auslöser"-Funktion behaftet sein. Das eingeschleuste Virus hält dann für einen vorbestimmten Zeitraum still und wird erst durch den sogenannten Auslöser, zum Beispiel durch eine im Programm eingearbeitete Zeitangabe oder durch spezielle Flags wirksam. Wenn man also vor eventuellen "Zeitbomben" sicher sein will, muß die Datenverarbeitungsanlage fortlaufend im Hinblick auf eventuell eingeschleuste und neu auftretende Viren untersucht werden.

Der vorliegenden Erfindung liegt nun die Aufgabe zugrunde, eine Methode zu finden, mit der eine einfache und beliebig wiederholbare Überprüfung einer Datenverarbeitungsanlage im Hinblick auf eventuell vorhandene Computerviren durchführbar ist.

Die Lösung dieser Aufgabe ergibt sich erfindungsgemäß durch die kennzeichnenden Merkmale des Patentanspruchs 1. Eine vorteilhafte Weiterbildung des Erfindungsgedankens ist im Anspruch 2 angegeben.

Das erfindungsgemäße Verfahren hat den Vorteil, daß anstelle eines sehr aufwendigen Programmvergleichs lediglich ein Vergleich zweier Codes erforderlich ist. Voraussetzung für das Funktionieren des erfindungsgemäßen Verfahrens ist eine zweifelsfrei sterile Kopie des Programms, das heißt, das Programm muß auf einer Datenverarbeitungsanlage hergestellt werden, von der mit Sicherheit davon ausgegangen werden kann, daß sie zum Zeitpunkt der Programmherstellung virusfrei war. Die Gewähr, daß ein steriles Vergleichs-"Normal" vorhanden ist, kann am einfachsten mit einem von der Testperson selbst geschriebenen Programm gegeben werden, bei dem die Testperson sicher sein kann, daß kein Virus eingepflanzt worden ist. Das aufgrund einer Differenz zwischen den beiden Codes gefundene Virus kann dann gegebenenfalls isoliert und untersucht werden. Aus der Art und der Wirkungsweise des gefundenen Virus können schließlich Methoden zur Desinfektion der Anlage entwickelt werden.

Im folgenden wird die Erfindung anhand der Zeichnung näher erläutert. Dabei zeigen

FIG 1 ein Blockschaltbild für eine Anordnung zur Erzeugung eines Testprogramms,

FIG 2 ein Blockschaltbild für eine Anordnung zur Durchführung eines Testdurchlaufs.

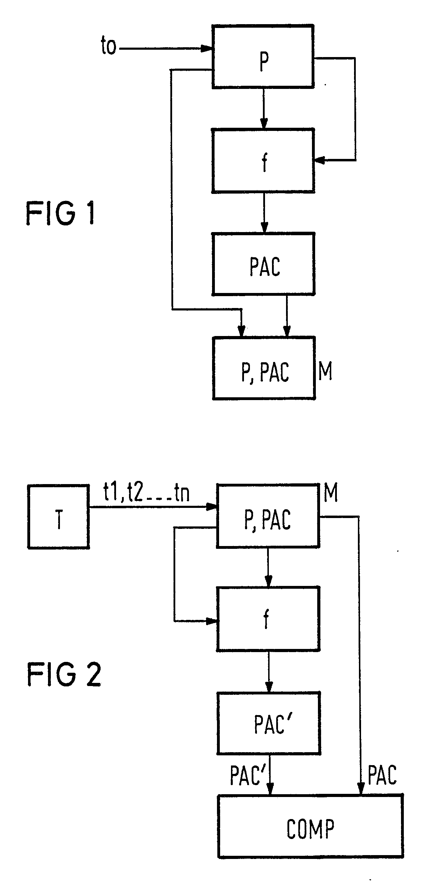

Ausgangspunkt für das erfindungsgemäße Verfahren ist ein absolut virusfreies Programm P, dessen Besonderheit darin besteht, daß es einen Algorithmus f enthält. Gemäß Figur 1 wird nun mit Hilfe dieses Algorithmus f zum Zeitpunkt to aus dem Programm P ein Programmauthentifizierungs-Code PAC erzeugt, der zusammen mit dem Programm P in einem Speichermedium M abgespeichert wird.

Dieses, aus dem virusfreien Programm P und dem Programmauthentifizierungs-Code PAC gebildete Testprogramm wird nun gemäß Figur 2 zu späteren Zeitpunkten t1, t2 ... tn als sogenanntes Köderprogramm in die zu untersuchende Datenverarbeitungsanlage eingebracht, um feststellen zu können, ob diese Datenverarbeitungsanlage noch steril oder bereits von sogenannten Computerviren befallen ist. Dieser zum Beispiel durch einen in der Datenverarbeitungsanlage vorhandenen Zeitgeber T ausgelöste Test läuft nun so ab, daß aus dem

2

gespeicherten Testprogramm, d.h. mit dem im Programm P enthaltenen Algorithmus f ein weiterer Programmauthentifizierungs-Code PAC' erzeugt wird. Sowohl dieser neu gebildete Programmauthentifizierungs-Code PAC' als auch der gespeicherte Programmauthentifizierungs-Code PAC werden schließlich einem Komparator COMP zugeführt, der bei Ungleichheit der Signale ein Fehlersignal erzeugt.

**Ansprüche**

1. Verfahren zum Diagnostizieren einer von Computerviren befallenen Datenverarbeitungsanlage mit Hilfe eines Testprogramms,
**gekennzeichnet** durch die Verwendung eines, einen Algorithmus f enthaltenden, virusfreien Programms P, aus dem zum Zeitpunkt $x = t_0$ mit Hilfe des Algorithmus ein Programmauthentifizierungs-Code $PAC = f(P)$ gebildet und zusammen mit dem Programm abgespeichert wird und daß dieses virusfreie Programm zu späteren Zeitpunkten $x' = t_1, t_2, t_3... t_n$ als Köderprogramm in die zu untersuchende Datenverarbeitungsanlage eingebracht und gestartet, der sich dabei jeweils ergebende Programmauthentifizierungs-Code (PAC') mit dem gespeicherten Programmauthentifizierungs-Code (PAC) verglichen und bei Ungleichheit ein Fehlersignal erzeugt wird.

2. Verfahren nach Anspruch 1,
**dadurch gekennzeichnet,** daß der zu späteren Zeitpunkten gestartete Programmlauf durch einen in der Datenverarbeitungsanlage vorhandenen Zeitgeber ausgelöst wird.

FIG 1

FIG 2